# EUROPEAN PATENT APPLICATION

(11) **EP 4 759 436 A1**
(43) Date of publication of application: **17.06.2026**
(21) Application number: 25822324.7
(22) Date of filing: 05.06.2025
(51) Int. Cl.: B05C 5/02, B05C 11/10, H01M 4/04

(54) **COATING APPARATUS**

(30) Priority: 11.06.2024 KR 20240075853
(71) Applicant: LG Energy Solution, Ltd., Seoul 07335 (KR)
(72) Inventor: CHA, Yu Ra, Daejeon 34122 (KR); HAN, Min Seong, Daejeon 34122 (KR); HONG, Seong Wook, Daejeon 34122 (KR); CHOI, Hyun Woo, Daejeon 34122 (KR); SEO, Sang Jin, Daejeon 34122 (KR); JANG, Jin Hyeok, Daejeon 34122 (KR); CHOI, Hyoung Ryun, Daejeon 34122 (KR); SON, Jun Myeong, Daejeon 34122 (KR)
(74) Representative: Plasseraud IP
(86) International application number: PCT/KR2025/007689
(87) International publication number: WO 2025/258915

(57) **Abstract**

The technical idea of the present disclosure provides a coating apparatus including a first coating die configured to discharge a first coating liquid toward a base substrate, wherein the first coating die includes: a first outlet configured to discharge the first coating liquid and having a length in a first direction greater than a length in a second direction; and a first groove in communication with the first outlet and extending in the second direction.

## Description

### [Technical Field]

The present disclosure relates to a coating apparatus.

This application claims the benefit of priority from Korean Patent Application No. 10-2024-0075853, filed on June 11, 2024, the entire contents disclosed therein are incorporated by reference into this disclosure.

### [Background]

With technological development and increasing demand for mobile devices, the demand for secondary batteries as an energy source is rapidly increasing, and such secondary batteries include an electrode assembly. The electrode assembly has a form in which a positive electrode, a separator, and a negative electrode are stacked at least once or more, and the positive electrode and the negative electrode are manufactured by applying a coating liquid to current collectors made of aluminum foil and copper foil, respectively. The coating liquid may include an electrode slurry (positive electrode active material slurry or negative electrode active material slurry) and/or an insulation liquid applied on the current collector to cover both side portions of the electrode slurry applied on the current collector.

### [Summary]

### [Technical Problem]

The technical problem to be solved by the present disclosure is to provide a coating apparatus.

### [Technical Solution]

To solve the above-described problem, the technical idea of the present disclosure provides a coating apparatus including a first coating die configured to discharge a first coating liquid toward a base substrate, wherein the first coating die comprises: a first outlet configured to discharge the first coating liquid and having a length in a first direction greater than a length in a second direction; and a first groove in communication with the first outlet and extending in the second direction.

In exemplary embodiments, the first coating die comprises a first upper lip body and a first lower lip body spaced apart with the first outlet therebetween, and the first upper lip body comprises the first groove.

In exemplary embodiments, the first coating die comprises a first upper lip body and a first lower lip body spaced apart with the first outlet therebetween, the first upper lip body comprises the first groove, and the first lower lip body comprises a second groove in communication with the first outlet and extending in the second direction.

In exemplary embodiments, the first groove penetrates the first upper lip body, and the second groove penetrates the first lower lip body.

In exemplary embodiments, the first upper lip body further comprises a third groove in communication with the first outlet and extending in the second direction, and the first lower lip body further comprises a fourth groove in communication with the first outlet and extending in the second direction.

In exemplary embodiments, the first groove and the second groove are aligned in the second direction.

In exemplary embodiments, the first groove is connected to a center part of the first outlet in the second direction.

In exemplary embodiments, the first outlet comprises a first end and a second end opposite in the first direction, and the first groove is closer to the first end of the first outlet than to the second end of the first outlet.

In exemplary embodiments, further comprising a second coating die configured to discharge a second coating liquid toward the base substrate.

In exemplary embodiments, the first coating liquid is an insulation liquid, and the second coating liquid is an electrode slurry.

In exemplary embodiments, the second coating die and the first coating die are sequentially arranged along a transfer direction of the base substrate.

In exemplary embodiments, the first coating die and the second coating die are arranged in parallel along a width direction of the base substrate.

In exemplary embodiments, the second coating die comprises: a second outlet configured to discharge the second coating liquid and having a length in a third direction greater than a length in a fourth direction; and a fifth groove in communication with the second outlet and extending in the fourth direction.

In exemplary embodiments, the second coating die comprises a second upper lip body and a second lower lip body spaced apart with the second outlet therebetween, and the second upper lip body comprises the fifth groove.

In exemplary embodiments, further comprising a second coating die configured to discharge a second coating liquid toward the base substrate, wherein the second coating die and the first coating die are sequentially arranged along a transfer direction of the base substrate, the first coating liquid is an insulation liquid, and the second coating liquid is an electrode slurry.

### [Advantageous Effects]

According to the coating apparatus of exemplary embodiments of the present disclosure, by disposing a groove serving as a discharge path for the insulation liquid in a die lip of the first coating die, a discharge flow rate of the insulation liquid can be locally controlled, and thickness uniformity of an insulation layer formed on the base substrate can be improved by locally controlling the discharge flow rate of the insulation liquid. Accordingly, loss due to thickness non-uniformity of the insulation layer can be reduced.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a cross-sectional view illustrating a coating apparatus according to exemplary embodiments of the present disclosure.
FIG. 2 is a perspective view illustrating a first coating die according to exemplary embodiments of the present disclosure.
FIG. 3 is a perspective view illustrating a region marked as "III" in FIG. 2.
FIG. 4a and FIG. 4b are cross-sectional views illustrating a coating process of a coating apparatus according to a comparative example.
FIG. 5a and FIG. 5b are cross-sectional views illustrating a coating process of a coating apparatus according to exemplary embodiments of the present disclosure.
FIG. 6 is a perspective view illustrating a first coating die according to exemplary embodiments of the present disclosure.
FIG. 7 is a perspective view illustrating a first coating die according to exemplary embodiments of the present disclosure.
FIG. 8 is a perspective view illustrating a first coating die according to exemplary embodiments of the present disclosure.
FIG. 9 is a perspective view illustrating a first coating die according to exemplary embodiments of the present disclosure.
FIG. 10 is a cross-sectional view illustrating a coating apparatus according to exemplary embodiments of the present disclosure.
FIG. 11 is a plan view illustrating a portion of a coating apparatus according to exemplary embodiments of the present disclosure.
FIG. 12 is a perspective view illustrating a portion of a second coating die of a coating apparatus according to exemplary embodiments of the present disclosure.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

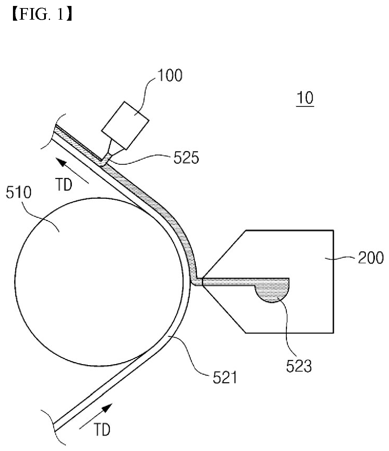

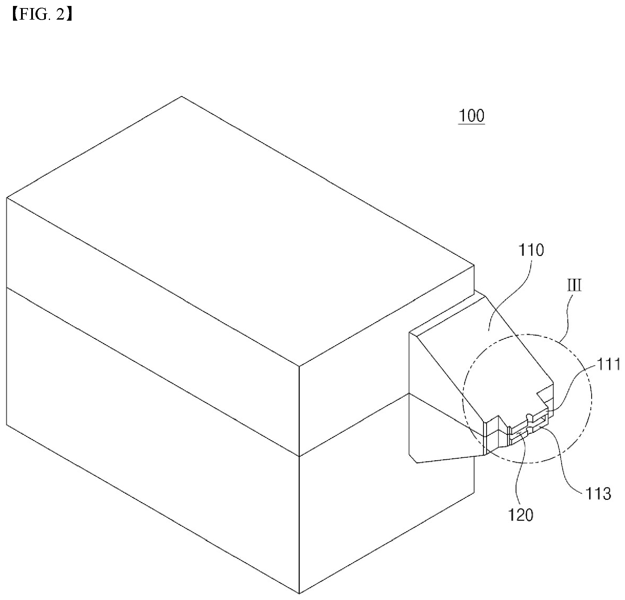

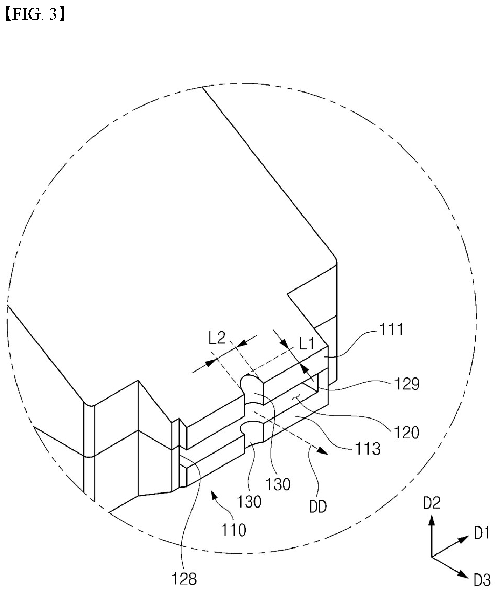

FIG. 1 is a cross-sectional view illustrating a coating apparatus 10 according to exemplary embodiments of the present disclosure. FIG. 2 is a perspective view illustrating a first coating die 100 according to exemplary embodiments of the present disclosure. FIG. 3 is a perspective view illustrating a region marked as "III" in FIG. 2.

Referring to FIG. 1 to FIG. 3, the coating apparatus 10 can apply a coating liquid on a base substrate 521 by discharging the coating liquid toward the base substrate 521 moving by a coating roll 510, and can perform a coating process for manufacturing electrodes for secondary batteries. The coating liquid may include an electrode slurry 523 and an insulation liquid 525. The coating apparatus 10 can discharge the electrode slurry 523 and the insulation liquid 525 toward the base substrate 521 moving by the coating roll 510. The electrode slurry 523 applied on the base substrate 521 becomes an electrode slurry layer, and the insulation liquid 525 applied on the base substrate 521 can become an insulation layer covering side portions of the electrode slurry layer. In the present disclosure, the insulation liquid 525 may be referred to as the first coating liquid, and the electrode slurry 523 may be referred to as a second coating liquid.

The base substrate 521 may be a current collector. The current collector may be a positive electrode current collector. For example, the positive electrode current collector may include stainless steel, aluminum, nickel, titanium, calcined carbon, or the like. The current collector may be a negative electrode current collector. For example, the negative electrode current collector may include copper, stainless steel, nickel, titanium, calcined carbon, or the like.

The electrode slurry 523 may include an electrode active material, a conductive material, a binder, and an additive. The electrode active material may include a positive electrode active material or a negative electrode active material. For example, the positive electrode active material may include a lithium metal composite oxide including nickel (Ni), cobalt (Co), and manganese (Mn). For example, the negative electrode active material may include at least one of a carbon material and a silicon material. The carbon material may mean a carbon material containing carbon atoms as a main component. The silicon material is particles containing silicon (Si) as a main component as a metal component, and may include at least one of silicon (Si) particles and silicon oxide particles.

The insulation liquid 525 may include inorganic particles, a phenol compound, and a binder. For example, the inorganic particles may include at least one aluminum mineral selected from boehmite, gibbsite, diaspore, alunite, and nepheline. For example, the phenol particles can improve dispersibility of the inorganic particles included in the insulation liquid 525. Such phenol compounds may include at least one of tannic acid, baicalein, luteolin, taxifolin, myricetin, quercetin, rutin, catechin, epigallocatechin gallate, butein, piceatannol, pyrogallic acid, ellagic acid, amylose, amylopectin, and xanthan gum.

The coating apparatus 10 may include a first coating die 100 configured to discharge the insulation liquid 525 and a second coating die 200 configured to discharge the electrode slurry 523. The first coating die 100 may be configured to receive the insulation liquid 525 from the outside and discharge the insulation liquid 525 toward the base substrate 521. The second coating die 200 may be configured to receive the electrode slurry 523 from the outside and discharge the electrode slurry 523 toward the base substrate 521.

In exemplary embodiments, the second coating die 200 and the first coating die 100 may be sequentially arranged along a transfer direction TD of the base substrate 521 guided and moving by the coating roll 510. After the electrode slurry 523 discharged from the second coating die 200 is applied on the base substrate 521, the insulation liquid 525 discharged from the first coating die 100 may be applied on the base substrate 521. The insulation liquid 525 may be applied on the base substrate 521 to cover both side portions of the electrode slurry layer. The insulation liquid 525 may be applied on the base substrate 521 to cover both side portions of the electrode slurry layer, thereby suppressing or preventing a sliding phenomenon in which the thickness of the electrode slurry layer gradually decreases at outer portions of the electrode slurry layer, and reducing thickness deviation of the electrode slurry layer.

A first die lip 110 of the first coating die 100 may be disposed on one side of the first coating die 100 facing the base substrate 521. The first die lip 110 may include a discharge flow path configured to allow the insulation liquid 525 to flow and a first outlet 120 configured to discharge the insulation liquid 525. The first outlet 120 may be provided at an end of the first die lip 110. The insulation liquid 525 provided from the outside may be delivered to the first outlet 120 through the discharge flow path of the first coating die 100, and the insulation liquid 525 discharged from the first outlet 120 may be discharged toward the base substrate 521 in a discharge direction DD. Hereinafter, a first direction D1 is defined as a direction perpendicular to the discharge direction DD of the insulation liquid 525, a second direction D2 is defined as a direction perpendicular to the first direction D1 and the discharge direction DD of the insulation liquid 525, and a third direction D3 is defined as a direction parallel to the discharge direction DD of the insulation liquid 525.

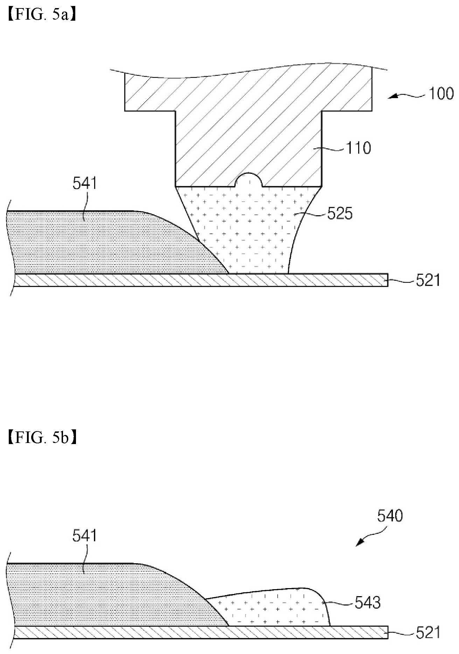

The first outlet 120 may have a slit shape extending in the first direction D1. A length of the first outlet 120 in the first direction D1 may be greater than a length of the first outlet 120 in the second direction D2. When the first outlet 120 has a first end 128 and a second end 129 opposite in the first direction D1, the first end 128 of the first outlet 120 may be further spaced from an edge of the base substrate 521 than the second end 129. As shown in FIG. 5a, when the insulation liquid 525 is applied on the base substrate 521, the first end 128 of the first outlet 120 may overlap the electrode slurry layer 541, and the second end 129 of the first outlet 120 may not overlap the electrode slurry layer 541.

The first die lip 110 of the first coating die 100 may include a first upper lip body 111 and a first lower lip body 113 that define the first outlet 120 and the discharge flow path. The first upper lip body 111 and the first lower lip body 113 may be spaced apart with the first outlet 120 and the discharge flow path therebetween.

The first die lip 110 may include a groove 130 in communication with the first outlet 120. The groove 130 may be provided at an end of the first die lip 110. The groove 130 may extend in the second direction D2, which is a direction perpendicular to an extending direction of the first outlet 120. While the insulation liquid 525 is discharged from the first coating die 100, the insulation liquid 525 may be discharged to the base substrate 521 through not only the first outlet 120 but also the groove 130 provided in the first die lip 110. Since the insulation liquid 525 is discharged to the base substrate 521 through the groove 130 provided in the first die lip 110, a discharge flow rate of the insulation liquid 525 may be locally increased near the groove 130 of the first die lip 110.

In exemplary embodiments, the groove 130 may have a semicircular shape when viewed in a plane. In other exemplary embodiments, the groove 130 may have a polygonal shape such as a triangle or rectangle when viewed in a plane.

In exemplary embodiments, a depth L1 of the groove 130 may be between tens to hundreds of micrometers (µm). In exemplary embodiments, the depth L1 of the groove 130 may be between 100µm to 800µm. The depth L1 of the groove 130 may be defined as a maximum length of the groove 130 in the third direction D3.

In exemplary embodiments, a width L2 of the groove 130 may be between 0.1 millimeters (mm) to 2mm. The width L2 of the groove 130 may be defined as a maximum length of the groove 130 in the first direction D1.

In exemplary embodiments, the first die lip 110 may include a groove 130 provided in the first upper lip body 111 and a groove 130 provided in the first lower lip body 113. The groove 130 of the first upper lip body 111 may be in communication with the first outlet 120 and extend in the second direction D2. The groove 130 of the first upper lip body 111 may be provided at an end of the first upper lip body 111 and penetrate the first upper lip body 111 in the second direction D2. The groove 130 of the first lower lip body 113 may be in communication with the first outlet 120 and extend in the second direction D2. The groove 130 of the first lower lip body 113 may be provided at an end of the first lower lip body 113 and penetrate the first lower lip body 113 in the second direction D2. In exemplary embodiments, the groove 130 of the first upper lip body 111 and the groove 130 of the first lower lip body 113 may be aligned in the second direction D2. In exemplary embodiments, the groove 130 of the first upper lip body 111 and the groove 130 of the first lower lip body 113 may each be connected to a center part of the first outlet 120 in the second direction D2.

The groove 130 of the first coating die 100 may be provided as a discharge path for the insulation liquid 525. That is, while the insulation liquid 525 is discharged from the first coating die 100, the insulation liquid 525 may be discharged to the base substrate 521 through not only the first outlet 120 but also the groove 130 connected to a center part of the first outlet 120. A discharge flow rate of the insulation liquid 525 may be locally increased in a region where the groove 130 of the first coating die 100 is provided.

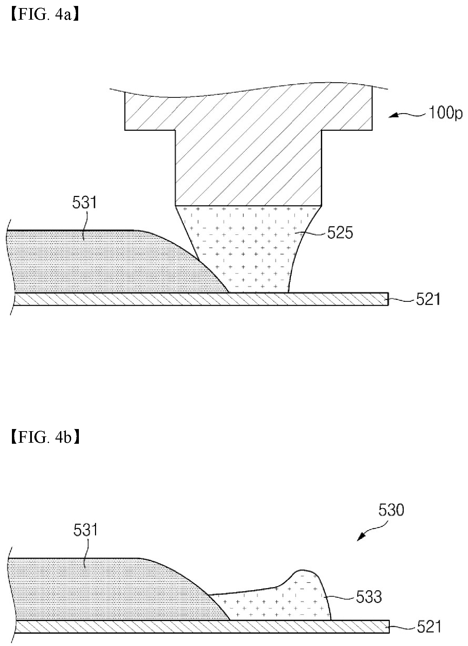

FIG. 4a and FIG. 4b are cross-sectional views illustrating a coating process of a coating apparatus according to a comparative example.

Referring to FIG. 4a, the coating apparatus according to the comparative example applies the electrode slurry 523 on the base substrate 521 to form an electrode slurry layer 531, and thereafter a coating die 100p of the coating apparatus discharges the insulation liquid 525 toward side portions of the electrode slurry layer 531 and surrounding portions thereof so that the side portions of the electrode slurry layer 531 are covered with the insulation liquid 525.

Referring to FIG. 4b, a drying process is performed on the electrode slurry layer 531 and insulation layer 533 applied on the base substrate 521. The base substrate 521, electrode slurry layer 531, and insulation layer 533 may constitute an electrode sheet 530 for manufacturing electrodes for secondary batteries. As shown in FIG. 4b, thickness deviation of the insulation layer 533 may occur due to vibration of the base substrate 521 or the like. When the thickness deviation of the insulation layer 533 exceeds a certain level, there is a concern that suppression of the sliding phenomenon of the electrode slurry layer 531 and profile control of the electrode slurry layer 531 using the insulation layer 533 may not be sufficiently achieved. Therefore, the thickness deviation of the insulation layer 533 is required to be managed below a certain level.

FIG. 5a and FIG. 5b are cross-sectional views illustrating a coating process of the coating apparatus 10 according to exemplary embodiments of the present disclosure.

Referring to FIG. 5a together with FIG. 1 to FIG. 3, the second coating die 200 of the coating apparatus 10 may apply the electrode slurry 523 on the base substrate 521 to form an electrode slurry layer 541, and thereafter the first coating die 100 of the coating apparatus 10 may discharge the insulation liquid 525 toward side portions of the electrode slurry layer 541 and surrounding portions thereof so that the side portions of the electrode slurry layer 541 are covered with the insulation liquid 525.

Referring to FIG. 5b, a drying process is performed on the electrode slurry layer 541 and insulation layer 543 applied on the base substrate 521. The base substrate 521, electrode slurry layer 541, and insulation layer 543 may constitute an electrode sheet 540 for manufacturing electrodes for secondary batteries.

According to exemplary embodiments, the first coating die 100 can discharge the insulation liquid 525 through not only the first outlet 120 but also the groove 130 provided in the first die lip 110, and can locally control a discharge flow rate of the insulation liquid 525 through the groove 130 provided in the first die lip 110. For example, the groove 130 is provided near a center part of the first outlet 120, and a discharge flow rate of the insulation liquid 525 may be locally increased near the center part of the first outlet 120.

According to the coating apparatus 10 of exemplary embodiments of the present disclosure, by disposing the groove 130 serving as a discharge path for the insulation liquid 525 in the first die lip 110 of the first coating die 100, the discharge flow rate of the insulation liquid 525 can be locally controlled, and thickness uniformity of the insulation layer 543 formed on the base substrate 521 can be improved by locally controlling the discharge flow rate of the insulation liquid 525. Accordingly, loss due to thickness non-uniformity of the insulation layer 543 can be reduced.

### (second embodiment)

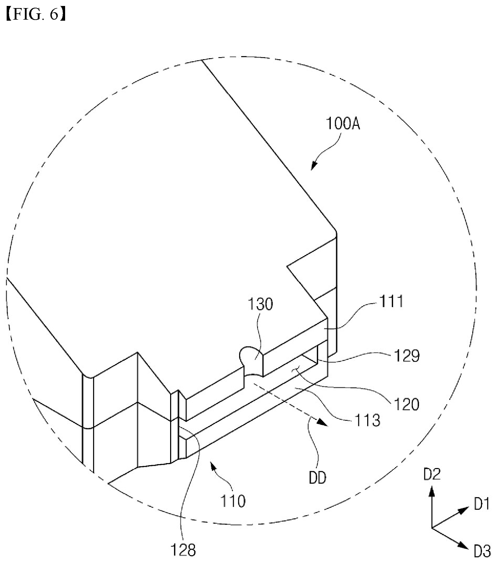

FIG. 6 is a perspective view illustrating a first coating die 100A according to exemplary embodiments of the present disclosure. Hereinafter, the first coating die 100A shown in FIG. 6 will be described focusing on differences from the first coating die 100 of the coating apparatus 10 described with reference to FIG. 1 to FIG. 3.

Referring to FIG. 6, a groove 130 of the first coating die 100A may be provided in any one of the first upper lip body 111 and the first lower lip body 113. In exemplary embodiments, the first upper lip body 111 may include a groove 130 in communication with the first outlet 120. In other exemplary embodiments, the first lower lip body 113 may include a groove 130 in communication with the first outlet 120.

### (third embodiment)

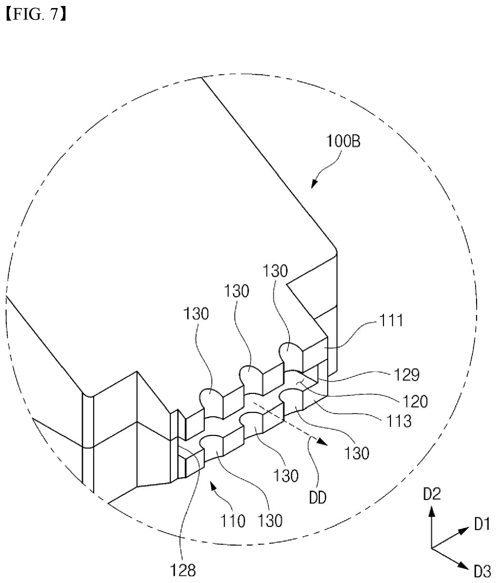

FIG. 7 is a perspective view illustrating a first coating die 100B according to exemplary embodiments of the present disclosure. Hereinafter, the first coating die 100B shown in FIG. 7 will be described focusing on differences from the first coating die 100 of the coating apparatus 10 described with reference to FIG. 1 to FIG. 3.

Referring to FIG. 7, in the first coating die 100B, the first upper lip body 111 and the first lower lip body 113 may each include a plurality of grooves 130. The plurality of grooves 130 provided in the first upper lip body 111 may be spaced apart from each other in the first direction D1, and the plurality of grooves 130 provided in the first lower lip body 113 may be spaced apart from each other in the first direction D1. Although FIG. 7 illustrates that the first upper lip body 111 and the first lower lip body 113 each include three grooves 130, this is not limiting, and the first upper lip body 111 and the first lower lip body 113 may each include two or more grooves 130.

### (fourth embodiment)

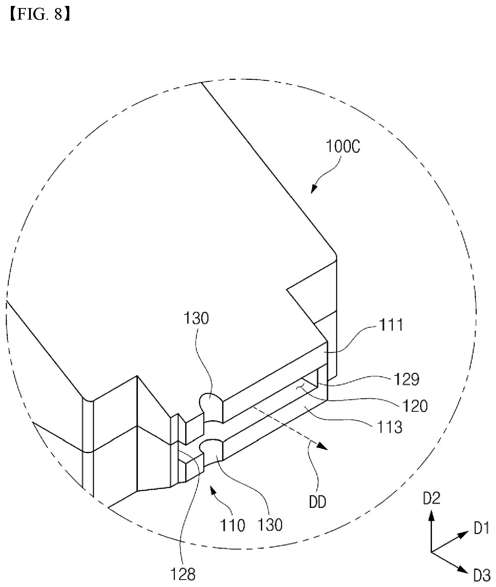

FIG. 8 is a perspective view illustrating a first coating die 100C according to exemplary embodiments of the present disclosure. Hereinafter, the first coating die 100C shown in FIG. 8 will be described focusing on differences from the first coating die 100 of the coating apparatus 10 described with reference to FIG. 1 to FIG. 3.

Referring to FIG. 8 together with FIG. 5a, when the first coating die 100C discharges the insulation liquid 525 toward the base substrate 521, the first end 128 of the first outlet 120 may overlap the electrode slurry layer 541, and the second end 129 of the first outlet 120 may not overlap the electrode slurry layer 541. The groove 130 may be closer to the first end 128 of the first outlet 120 than to the second end 129 of the first outlet 120. In this case, a discharge flow rate of the insulation liquid 525 discharged to a region adjacent to or overlapping the electrode slurry layer 541 or a region adjacent to or overlapping a coated part of the electrode sheet 540 may be locally increased.

### (fifth embodiment)

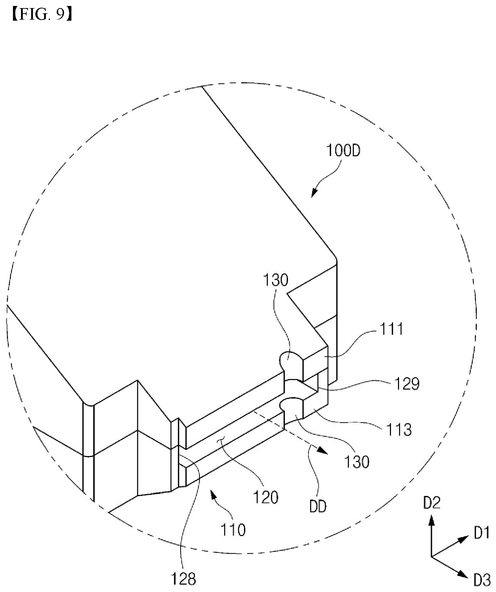

FIG. 9 is a perspective view illustrating a first coating die 100D according to exemplary embodiments of the present disclosure. Hereinafter, the first coating die 100D shown in FIG. 9 will be described focusing on differences from the first coating die 100 of the coating apparatus 10 described with reference to FIG. 1 to FIG. 3.

Referring to FIG. 9 together with FIG. 5a, when the first coating die 100D discharges the insulation liquid 525 toward the base substrate 521, the first end 128 of the first outlet 120 may overlap the electrode slurry layer 541, and the second end 129 of the first outlet 120 may not overlap the electrode slurry layer 541. The groove 130 may be closer to the second end 129 of the first outlet 120 than to the first end 128 of the first outlet 120. In this case, a discharge flow rate of the insulation liquid 525 discharged to a region not overlapping the electrode slurry layer 541 or a region overlapping an uncoated part of the electrode sheet 540 may be locally increased.

### (sixth embodiment)

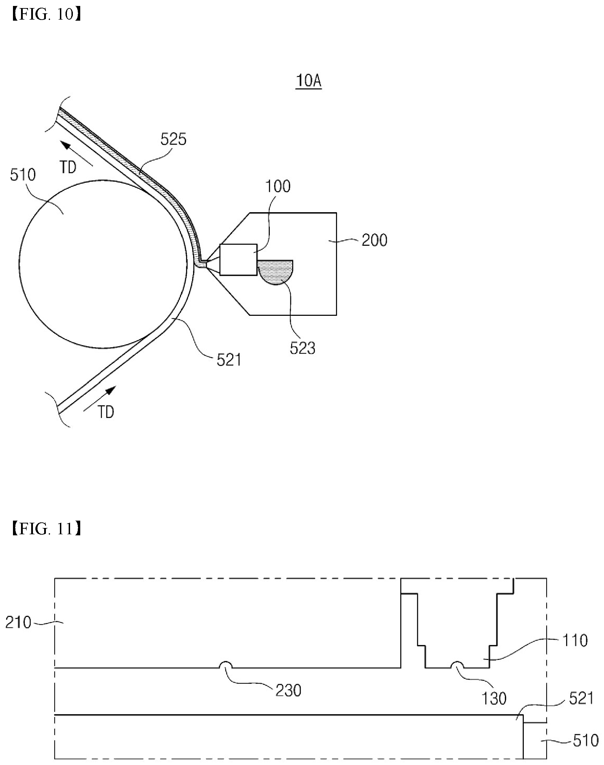

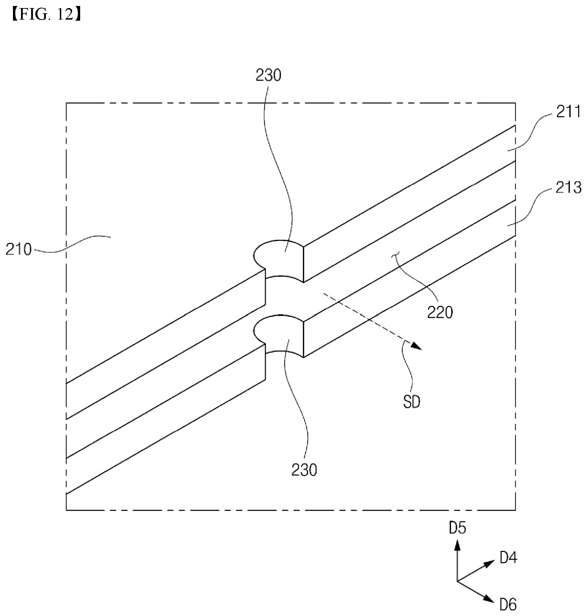

FIG. 10 is a cross-sectional view illustrating a coating apparatus 10A according to exemplary embodiments of the present disclosure. FIG. 11 is a plan view illustrating a portion of the coating apparatus 10A according to exemplary embodiments of the present disclosure. FIG. 12 is a perspective view illustrating a portion of a second coating die 200 of the coating apparatus 10A according to exemplary embodiments of the present disclosure. Hereinafter, the coating apparatus 10A shown in FIG. 10 to FIG. 12 will be described focusing on differences from the coating apparatus 10 described with reference to FIG. 1 to FIG. 3.

Referring to FIG. 10 to FIG. 12, the coating apparatus 10A may be configured to simultaneously discharge the insulation liquid 525 and the electrode slurry 523. The first coating die 100 and the second coating die 200 may be disposed on one side of the coating roll 510, and may be arranged in parallel along a width direction of the coating roll 510 or a width direction of the base substrate 521. The discharge of the insulation liquid 525 by the first coating die 100 and the discharge of the electrode slurry 523 by the second coating die 200 may be performed simultaneously.

A second die lip 210 of the second coating die 200 may be disposed on one side of the second coating die 200 facing the base substrate 521. The second die lip 210 may include a discharge flow path configured to allow the electrode slurry 523 to flow and a second outlet 220 configured to discharge the electrode slurry 523. The second outlet 220 may be provided at an end of the second die lip 210. The electrode slurry 523 provided from the outside may be delivered to the second outlet 220 through the discharge flow path of the second coating die 200, and the electrode slurry 523 discharged from the second outlet 220 may be discharged toward the base substrate 521 in a discharge direction SD. Hereinafter, a fourth direction D4 is defined as a direction perpendicular to the discharge direction SD of the electrode slurry 523, a fifth direction D5 is defined as a direction perpendicular to the fourth direction D4 and the discharge direction SD of the electrode slurry 523, and a sixth direction D6 is defined as a direction parallel to the discharge direction SD of the electrode slurry 523. The second outlet 220 may have a slit shape extending in the fourth direction D4. The length of the second outlet 220 in the fourth direction D4 may be greater than the length of the second outlet 220 in the fifth direction D5.

The second coating die 200 may include a second upper lip body 211 and a second lower lip body 213, wherein the second die lip 210 defines the second outlet 220 and the discharge flow path. The second upper lip body 211 and the second lower lip body 213 may be spaced apart with the second outlet 220 and the discharge flow path therebetween.

The second die lip 210 may include a groove 230 in communication with the second outlet 220. The groove 230 may be provided at the end of the second die lip 210. The groove 230 may extend in the fifth direction D5, which is a direction perpendicular to an extending direction of the second outlet 220. While the electrode slurry 523 is discharged from the second coating die 200, the electrode slurry 523 may be discharged to the base substrate 521 through not only the second outlet 220 but also the groove 230 provided in the second die lip 210. Since the electrode slurry 523 is discharged to the base substrate 521 through the groove 230 provided in the second die lip 210, a discharge flow rate of the electrode slurry 523 may be locally increased in a region where the groove 230 of the second die lip 210 is provided.

In exemplary embodiments, the groove 230 may be provided in at least one of the second upper lip body 211 and the second lower lip body 213. In exemplary embodiments, the second upper lip body 211 and the second lower lip body 213 may each include a groove 230, and the groove 230 of the second upper lip body 211 and the groove 230 of the second lower lip body 213 may be aligned in the fifth direction D5. In exemplary embodiments, the second upper lip body 211 and the second lower lip body 213 may each include a plurality of grooves 230.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A coating apparatus, comprising:
a first coating die configured to discharge a first coating liquid toward a base substrate,
wherein the first coating die comprises:
a first outlet configured to discharge the first coating liquid and having a length in a first direction greater than a length in a second direction; and
a first groove in communication with the first outlet and extending in the second direction.

2. The coating apparatus of claim 1, wherein the first coating die comprises a first upper lip body and a first lower lip body spaced apart with the first outlet therebetween, and
the first upper lip body comprises the first groove.

3. The coating apparatus of claim 1, wherein the first coating die comprises a first upper lip body and a first lower lip body spaced apart with the first outlet therebetween,
the first upper lip body comprises the first groove, and
the first lower lip body comprises a second groove in communication with the first outlet and extending in the second direction.

4. The coating apparatus of claim 3, wherein the first groove penetrates the first upper lip body, and
the second groove penetrates the first lower lip body.

5. The coating apparatus of claim 3, wherein the first upper lip body further comprises a third groove in communication with the first outlet and extending in the second direction, and
the first lower lip body further comprises a fourth groove in communication with the first outlet and extending in the second direction.

6. The coating apparatus of claim 3, wherein the first groove and the second groove are aligned in the second direction.

7. The coating apparatus of claim 1, wherein the first groove is connected to a center part of the first outlet in the second direction.

8. The coating apparatus of claim 1, wherein the first outlet comprises a first end and a second end opposite in the first direction, and
the first groove is closer to the first end of the first outlet than to the second end of the first outlet.

9. The coating apparatus of claim 1, further comprising a second coating die configured to discharge a second coating liquid toward the base substrate.

10. The coating apparatus of claim 9, wherein the first coating liquid is an insulation liquid, and
the second coating liquid is an electrode slurry.

11. The coating apparatus of claim 9, wherein the second coating die and the first coating die are sequentially arranged along a transfer direction of the base substrate.

12. The coating apparatus of claim 9, wherein the first coating die and the second coating die are arranged in parallel along a width direction of the base substrate.

13. The coating apparatus of claim 9, wherein the second coating die comprises:
a second outlet configured to discharge the second coating liquid and having a length in a third direction greater than a length in a fourth direction; and
a fifth groove in communication with the second outlet and extending in the fourth direction.

14. The coating apparatus of claim 13, wherein the second coating die comprises a second upper lip body and a second lower lip body spaced apart with the second outlet therebetween, and
the second upper lip body comprises the fifth groove.

15. The coating apparatus of claim 1, further comprising a second coating die configured to discharge a second coating liquid toward the base substrate,
wherein the second coating die and the first coating die are sequentially arranged along a transfer direction of the base substrate,
the first coating liquid is an insulation liquid, and the second coating liquid is an electrode slurry.
